# FASCICULE DE BREVET EUROPEEN

(11) **EP 1 510 904 B1**
(45) Date de publication et mention de la délivrance du brevet: **31.12.2008**
(21) Numéro de dépôt: 04292016.5
(22) Date de dépôt: 09.08.2004
(51) Int. Cl.: G06F 21/00

(54) **Procédé et système d'évaluation du niveau de sécurité de fonctionnement d'un équipement électronique et d'accès conditionnel à des ressources**
Methode und System zur Bewertung der Sicherheit von elektronischen Geräten und zur Zugangskontrolle zu Ressourcen
Method and system for evaluating the level of security of an electronic equipment and for providing conditional access to resources

(30) Priorité: 19.08.2003 FR 0310017
(43) Date de publication de la demande: 02.03.2005
(73) Titulaire: FRANCE TELECOM, 75015 Paris (FR)
(72) Inventeur: Damlamian, Jean-Jacques, 92140 Clamart (FR); Penny, Philippe, 92500 Rueil Malmaison (FR); Broudic, Mélaine, 92130 Issy les Moulineaux (FR)
(74) Mandataire: Loisel, Bertrand

(56) Documents cités:
- EP-A- 1 308 822
- WO-A-02/14987
- WO-A-03/029934
- US-A1- 2002 087 882

## Description

La présente invention concerne un procédé et un système d'évaluation du niveau de sécurité de fonctionnement d'au moins un équipement électronique à partir d'un dispositif d'évaluation distant, ainsi que d'un procédé et d'un système d'accès conditionnel à des ressources informatiques.

Le développement des réseaux électroniques rend critiques les problèmes liés à la sécurité. En effet, la sécurité de l'ensemble d'un système résulte du niveau de sécurité de chaque équipement individuellement, lequel dépend d'un ensemble de paramètres et de capacités relatifs au traitement des informations en entrée et en sortie de cet équipement.

Il existe aujourd'hui également des moyens d'évaluation du niveau de sécurité de fonctionnement local d'un équipement vérifiant notamment les logiciels existants sur l'équipement, qui délivrent uniquement à l'utilisateur de cet équipement, une évaluation détaillée réalisée directement au niveau local.

Dans certains systèmes de l'état de l'art, l'accès à une ressource distante à partir d'un équipement électronique est conditionné par la seule existence sur cet équipement, de logiciels de sécurité qui sont détectés, par exemple, grâce à la présence de fichiers informatiques, couramment appelés « cookies », qui indiquent le nom et la version des logiciels présents.

Par ailleurs, il existe des moyens d'évaluation du niveau de sécurité de fonctionnement des moyens d'échange d'informations entre un équipement et un dispositif distant, tels qu'un serveur d'accès.

Par exemple, ces moyens sont capables de déterminer quels sont les ports de communication d'un équipement accessible à distance et quel est leur niveau de sécurité respectif.

Avantageusement, de tels systèmes utilisent également des moyens d'évaluation du niveau de sécurité de fonctionnement local, tels que décrits précédemment.

Cependant, le contrôle de l'existence de moyens de sécurité sur un équipement, même cumulé à une évaluation du niveau de sécurité des moyens d'échange d'informations, ne permet pas d'assurer un haut niveau de sécurité de fonctionnement pour cet équipement.

Notamment, les moyens de sécurité existants peuvent ne pas être activés et d'autres failles indétectables à distance peuvent exister.

Il apparaît donc que les systèmes de l'état de l'art établissent une évaluation limitée du niveau de sécurité d'un équipement électronique.

Le but de l'invention est de remédier à ce problème en définissant un procédé et un système d'évaluation du niveau de sécurité de fonctionnement d'un équipement électronique permettant de délivrer une évaluation globale du niveau de sécurité ainsi qu'un procédé et système de contrôle d'accès correspondants.

Par ailleurs, le document WO-A2-02114987 décrit un procédé pour protéger des ressources réseau d'accès et/ou d'utilisation non autorisés, dans lequel un dispositif ayant rassemblé des données à propos de toutes les tentatives d'accès dirigées vers les ressources réseau, fournit cette information à un dispositif analyseur qui adapte des niveaux de permission pour correspondre avec au moins les informations nouvelles fournies.

Le document EP-A2-1 308 822 décrit un procédé pour permettre une vérification fiable et rapide du statut d'un système d'information par l'utilisation de questionnaires soumis à des personnes membres d'une organisation.

Le document US-A1-2002/0087 882 décrit un procédé selon le préambule de la revendication 1.

La présente invention a pour objet un procédé tel que défini dans la revendication 1.

D'autres caractéristiques de ce procédé sont définies dans les revendications dépendantes.

L'invention a encore pour objet un système tel que défini dans la revendication 8.

D'autres caractéristiques de ce système d'évaluation du niveau de sécurité sont définies dans les revendications dépendantes.

L'invention a également pour objet un programme d'ordinateur tel que défini dans la revendication 14.

L'invention sera mieux comprise à la lecture de la description qui va suivre, donnée uniquement à titre d'exemple et faite en se référant aux dessins annexés, sur lesquels :
- la Fig.1 est un schéma synoptique d'un système d'accès conditionnel mettant en oeuvre l'invention ; et
- la Fig.2 est un organigramme d'un procédé d'accès conditionnel comprenant l'invention.

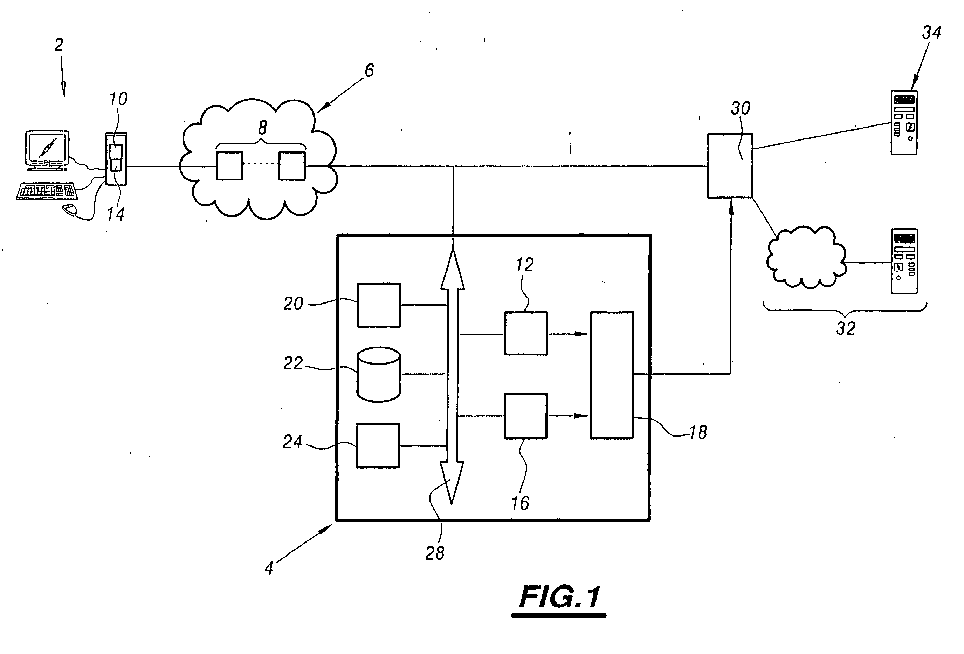

Sur la figure 1, on a représenté un système d'accès conditionnel mettant en oeuvre l'invention.

Ce système comporte un équipement électronique désigné par la référence numérique générale 2, formé dans l'exemple d'un micro-ordinateur, mais pouvant être n'importe quel équipement électronique, tel qu'un téléphone portable ou encore un assistant numérique.

Bien entendu, un même système peut comporter plusieurs équipements électroniques 2 tous reliés au dispositif distant d'évaluation 4 et traités de manière équivalente, cependant, à des fins de clartés, l'invention sera décrite avec un seul équipement électronique 2.

L'équipement électronique 2 est relié à un dispositif distant d'évaluation 4 du niveau de sécurité au travers d'un réseau de télécommunication 6.

En fonction des modes de réalisation, le réseau de télécommunication 6 peut être le réseau Internet ou tout autre réseau de télécommunication public ou privé ou encore un réseau de télécommunication privé virtuel de type VPN.

Notamment, le réseau 6 comprend des équipements de connexion, désignés par la référencé générale 8, assurant la liaison entre l'équipement électronique 2 et le dispositif distant 4. Ces équipements 8 incluent notamment des routeurs et/ou des commutateurs de réseau.

Bien entendu, un même système peut comporter plusieurs équipements électroniques 2 tous reliés au dispositif distant d'évaluation 4 et traités de manière équivalente, cependant, à des fins de clartés, l'invention sera décrite avec un seul équipement électronique 2.

De manière classique, l'équipement électronique 2 comporte des moyens 10 d'évaluation de son niveau de sécurité de fonctionnement local, formés par exemple d'un logiciel informatique de sécurité de type classique, installé et exécutable sur cet équipement électronique 2.

Par exemple, les moyens 10 d'évaluation du niveau de sécurité de fonctionnement local sont adaptés pour :
- la détection de la nature et de la version des moyens logiciels présents sur l'équipement électronique 2 et notamment du système d'exploitation, d'un antivirus et d'un pare-feu ;
- la vérification du statut des moyens logiciels de sécurité et notamment de l'activation d'un antivirus et d'un pare-feu ;
- la vérification de l'utilisation de mots de passe et de leur niveau de sécurité (taille, complexité, renouvellement) ;
- la détection des possibilités d'accès anonyme à distance (compte de type « guest », vulnérabilité, « netspies », ....) ;
- la détection des ressources partagées ;
- la détection des ports ouverts et des services actifs sur ces ports ;
- la détection des logiciels relatifs à l'émission et à la réception de messages électroniques ainsi que leur configuration ;
- la détection des services de type « serveur » installés sur le système ainsi que leur configuration de sécurité ; et
- la détection de logiciels cachés tels que des logiciels couramment désignés « chevaux de Troie » et « vers ».

De manière générale, il apparaît donc que les moyens 10 d'évaluation du niveau de sécurité de fonctionnement local permettent de délivrer une évaluation de sécurité au niveau matériel et logiciel ainsi que structurel et fonctionnel de l'équipement électronique 2.

- Par ailleurs, le dispositif distant d'évaluation 4 comporte des moyens 12 d'évaluation du niveau de sécurité des moyens d'échange d'informations 2,6,8 entre l'équipement électronique 2 et le dispositif distant 4, lesquels moyens d'échange d'informations 2,6,8 comportent tous les éléments impliqués et implicables dans les entrées/sorties d'informations entre l'équipement électronique 2 et le dispositif distant d'évaluation 4.

Notamment, les moyens d'échange d'informations 2,6,8 incluent les éléments de l'équipement électronique 2 destinés à l'entrée/sortie d'informations tels que ports de communication et modems, ainsi que les éléments de sécurité de l'équipement électronique 2 et les équipements 8 formant la liaison avec le dispositif distant 4.

Par exemple, les moyens 12 d'évaluation du niveau de sécurité de fonctionnement des moyens d'échange d'informations 2,6,8, sont adaptés pour :
- la détection des protocoles de communication activés ;
- la détection des ports de communication de l'équipement électronique 2 accessibles à distance et notamment des ports de type « UDP » et « TCP » ;
- la détection des services en cours d'exécution au niveau de chacun de ces ports ainsi que de leur vulnérabilité ;
- la détection du système d'exploitation installé sur l'équipement électronique 2 ainsi que de son statut et notamment de sa pile de messages de communication telle que la pile dite « IP » ; et
- la détection de la configuration des éventuels équipements de connexion 8 tels que des routeurs ou modems entre ledit équipement électronique 2 et le dispositif distant d'évaluation 4.

Selon l'invention, l'équipement électronique 2 comporte également des moyens 14 de transmission de l'évaluation délivrée par les moyens 10 d'évaluation du niveau de sécurité de fonctionnement local.

Ces moyens 14 de transmission sont adaptés pour la transmission de l'ensemble des informations de sécurité de natures logicielles et matérielles ainsi que structurelles et fonctionnelles formant cette évaluation.

De manière correspondante, le dispositif distant d'évaluation 4 comporte des moyens 16 de récupération de l'évaluation délivrée par les moyens 10.

Avantageusement, les moyens 14 et 16 comportent des moyens de chiffrement et de déchiffrement de type classique des informations qu'ils échangent, de sorte que la transmission de l'évaluation du niveau de sécurité de fonctionnement local de l'équipement électronique 2, est protégée lors de son transfert sur le réseau 6.

Enfin, le dispositif distant d'évaluation 4 comporte des moyens 18 de synthèse adaptés pour analyser l'évaluation du niveau de sécurité de fonctionnement local de l'équipement électronique 2, transmise par l'intermédiaire des moyens 14 et 16, ainsi l'évaluation du niveau de sécurité de fonctionnement des moyens d'échange d'informations 2,6,8, délivrée par les moyens 12.

Les moyens 18 de synthèse délivrent à l'aide de l'ensemble de ces informations, une évaluation globale du niveau de sécurité de l'équipement électronique 2.

L'évaluation globale délivrée par les moyens de synthèse 18 est donc une évaluation fondée à la fois sur des informations de sécurité de natures logicielles et matérielles ainsi que structurelles et fonctionnelles, récoltées au niveau de l'équipement électronique 2 et à distance.

Avantageusement, le dispositif distant d'évaluation 4 comporte des moyens 20 d'authentification d'un utilisateur lors de la connexion de l'équipement électronique 2. Ces moyens 20 sont réalisés de manière classique et sont reliés à une base de données d'utilisateur 22 comprise dans le dispositif distant d'évaluation 4.

De plus, dans le mode de réalisation décrit, la base de données 22 est accessible par les moyens de synthèse 18 afin d'inscrire pour chaque utilisateur authentifié, l'évaluation globale de niveau de sécurité obtenue.

Le dispositif distant d'évaluation 4 comporte par ailleurs des moyens d'analyse statistique 24, reliés à la base de données 22 et adaptés pour délivrer notamment une analyse statistique de l'évolution dans le temps de l'évaluation globale du niveau de sécurité de chaque utilisateur.

Dans l'exemple décrit, le dispositif distant d'évaluation 4 comporte un bus d'informations 28 permettant aux différents éléments d'échanger des informations entre eux.

Le système décrit est un système d'accès conditionnel, de sorte que le dispositif distant d'évaluation 4 est relié à un dispositif commandable 30 d'accès en fonction de l'évaluation globale du niveau de sécurité délivrée.

Le dispositif commandable 30 d'accès permet ainsi l'accès sélectivement soit à des ressources informatiques 32 dans le cas où l'évaluation globale du niveau de sécurité est favorable soit à un dispositif 34 de quarantaine, dans le cas où cette évaluation globale est défavorable.

Les ressources 32 sont par exemple formées d'un réseau interne d'entreprise auquel l'utilisateur de l'équipement électronique 2 accède à distance et au travers du réseau de télécommunication 6, par exemple dans le cadre du télétravail.

Le dispositif de quarantaine 34 permet de délivrer des informations relatives aux éléments présentant un niveau de sécurité trop faible ainsi que des propositions de solutions pour accroître le niveau de sécurité de fonctionnement de l'équipement électronique 2 et permettre ainsi l'accès aux ressources 32.

Les éléments 30 ainsi que 32 et 34 peuvent être réalisés sous la forme de serveurs informatiques indépendants ou être tout ou en partie intégrés dans le dispositif distant d'évaluation 4.

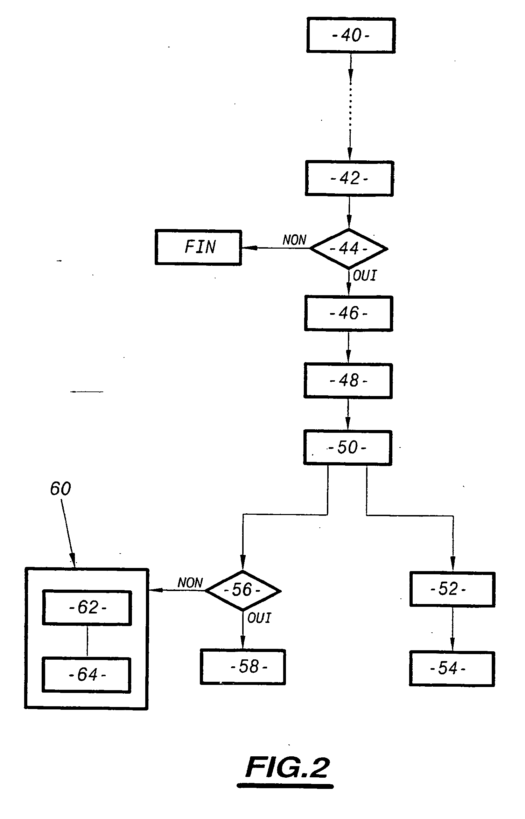

En référence à la figure 2, on va maintenant décrire un procédé d'accès conditionnel aux ressources protégées 32 mettant en oeuvre un procédé d'évaluation du niveau de sécurité selon l'invention dans le cadre du système tel que décrit en référence à la figure 1.

Ce procédé débute par une étape 40 d'évaluation du niveau de sécurité de fonctionnement local de l'équipement électronique 2 réalisé par la mise en oeuvre des moyens 10.

Avantageusement, cette étape 40 est répétée de manière périodique par les moyens 10 de l'équipement électronique 2.

Le procédé comporte ensuite une étape 42 de connexion de l'équipement électronique 2 au dispositif distant d'évaluation 4 au travers des moyens d'échange d'information.

Dans le mode de réalisation, cette étape 42 est suivie d'une étape 44 d'authentification de l'utilisateur de l'équipement électronique 2, par exemple au moyen de la saisie d'un nom utilisateur et d'un mot de passe, qui sont comparés par les moyens d'identification 20 aux informations mémorisées dans la base de données 22.

Dans le cas d'une authentification négative, l'accès est refusé et l'utilisateur est orienté vers des ressources en fibre accès.

Dans le cas d'une authentification positive, le procédé comporte ensuite une étape 46 d'évaluation du niveau de sécurité de fonctionnement des moyens d'échange d'informations 2,6,8 réalisée grâce à la mise en oeuvre des moyens 12 du dispositif distant d'évaluation 4.

Le procédé comporte également une étape 48 de récupération de l'évaluation délivrée par l'étape 40 d'évaluation du niveau de sécurité de fonctionnement local de l'équipement électronique 2, qui est réalisée indépendamment de l'étape 46.

Par exemple, cette étape 48 de récupération est réalisée sous la forme d'une requête émanant du dispositif distant d'évaluation 4 et plus particulièrement des moyens 16 de récupération, cette requête étant transmise à l'équipement électronique 2.

En réponse, les moyens 14 de transfert contenus dans l'équipement électronique 2, envoient au dispositif distant d'évaluation 4 l'ensemble des informations délivrées à l'issue de l'étape 40 d'évaluation du niveau de sécurité.

Dans le mode de réalisation décrit, la communication est chiffrée entre le dispositif distant d'évaluation 4 et l'équipement électronique 2, et plus particulièrement entre les moyens de récupération 16 du dispositif distant d'évaluation 4 et les moyens 14 de transfert d'informations de l'équipement électronique 2.

Par exemple, un couple clé publique/clé privée, ainsi que des systèmes de certificats sont utilisés pour chiffrer les communications entre l'équipement électronique 2 et le dispositif distant d'évaluation 4.

Bien entendu, d'autres méthodes de chiffrement et de communications sécurisées peuvent être utilisées.

L'étape 48 est suivie d'une étape 50 de synthèse dans laquelle l'évaluation délivrée par l'étape 46 d'évaluation du niveau de sécurité de fonctionnement des moyens d'échange d'informations 2,6,8 et l'évaluation récupérée lors de l'étape 48 correspondant à l'évaluation délivrée par l'étape 40 d'évaluation du niveau de sécurité de fonctionnement local de l'équipement électronique 2, sont utilisés pour former une évaluation globale du niveau de sécurité de fonctionnement de l'équipement électronique 2.

Notamment, dans le cas où l'étape 40 n'a pas été réalisée depuis un temps supérieur à une valeur de seuil prédéterminée ou pas réalisée du tout, cette évaluation globale est négative.

Il apparaît donc que les étapes 40 à 50 forment un procédé d'évaluation du niveau de sécurité de fonctionnement d'un équipement électronique fondé sur une évaluation, au niveau logiciel et matériel ainsi que structurel et fonctionnel de l'équipement électronique 2 et des moyens d'échange d'informations 2,6,8 avec le dispositif distant 4.

Avantageusement, l'étape 50 de synthèse est suivie d'une étape 52 de mémorisation de l'évaluation globale du niveau de sécurité délivrée et d'une étape 54 d'analyse statistique des différentes évaluations globales de niveau de sécurité délivrées, afin de permettre notamment une analyse statistique dans le temps pour chaque utilisateur authentifié.

Dans le cadre d'un procédé d'accès conditionnel, l'étape 50 est suivie d'une étape 56 d'accès conditionnel en fonction de l'évaluation globale du niveau de sécurité délivrée par l'étape 50.

Dans le cas où cette évaluation globale est supérieure à une valeur de seuil fixée, c'est-à-dire que le niveau de sécurité est jugé comme favorable, l'étape 56 d'accès conditionnel est suivie d'une étape 58 d'accès à des ressources distantes par l'équipement électronique 2.

A l'inverse, si l'évaluation globale du niveau de sécurité est inférieure à une valeur de seuil fixée, c'est-à-dire que l'évaluation est défavorable, l'étape 56 d'accès conditionnel est suivie d'une étape 60 de quarantaine.

Par exemple, cette étape 60 de quarantaine comporte une sous-étape 62 de diagnostic permettant d'informer l'utilisateur de l'équipement électronique 2 des failles de sécurité détectées et une sous-étape 64 de traitement des failles permettant de proposer des solutions et comprenant par exemple des propositions de téléchargement de logiciels complémentaires afin d'accroître le niveau de sécurité de fonctionnement de l'équipement électronique 2.

Notamment, dans le cas où l'étape 40 n'a pas été réalisée du fait par exemple de l'absence sur l'équipement électronique 2 de moyens adéquats, la sous-étape 64 propose le téléchargement des moyens logiciels 10.

Avantageusement, l'accès conditionnel en fonction de l'évaluation globale du niveau de sécurité est progressif et l'accès aux ressources 32 est segmenté en fonction de l'évaluation globale du niveau de sécurité, de sorte qu'un équipement présentant une évaluation globale faible, aura accès à un nombre très limité de ressources, et un équipement présentant une évaluation globale élevée, aura accès à une partie importante des ressources.

Il apparaît donc que le système et le procédé de l'invention permettent de délivrer une évaluation globale du niveau de sécurité de fonctionnement d'un équipement électronique, cette évaluation pouvant être utilisée à des fins informatives ou à des fins décisionnelles, afin notamment de réaliser un accès conditionnel à des ressources informatiques.

Bien entendu, différents modes de réalisation des moyens mis en oeuvre dans le système et le procédé de l'invention peuvent être envisagés.

Notamment, le dispositif distant d'évaluation 4 peut être formé d'un ou plusieurs serveurs, être intégré dans un équipement plus complexe, ou encore intégrer tout ou partie des autres éléments du système.

De plus, comme cela est indiqué précédemment, les différents dispositifs et équipements qui forment le système d'évaluation et qui mettent en oeuvre les différentes étapes de procédé, comportent des éléments formés notamment de moyens logiciels ou de portions de moyens logiciels également appelés « programmes », comportant des instructions ou codes permettant la réalisation des étapes du procédé.

Différentes combinaisons de ces moyens logiciels peuvent être envisagées et notamment l'utilisation sur le dispositif d'évaluation distant d'un programme apte à récupérer les évaluations du niveau de sécurité de fonctionnement local de l'équipement électronique et du niveau de sécurité de fonctionnement des moyens d'échange et à faire une synthèse de ces évaluations pour délivrer l'évaluation globale.

Avantageusement, ce même programme est apte à réaliser l'évaluation du niveau de sécurité de fonctionnement des moyens d'échange d'informations.

L'ensemble de programmes permettant la mise en oeuvre du procédé d'évaluation de l'invention, comprend également un programme mis en oeuvre par l'équipement électronique et apte à réaliser l'évaluation du niveau de sécurité de fonctionnement local de cet équipement ainsi que la connexion avec le dispositif distant d'évaluation à travers les moyens d'échange d'informations et la transmission vers le dispositif distant de l'évaluation locale du niveau de sécurité de fonctionnement.

Bien entendu, d'autres combinaisons des différents moyens logiciels formant le système de l'invention peuvent être envisagés.

## Revendications

1. Procédé, du type comportant :
- une étape (40) d'évaluation du niveau de sécurité de fonctionnement local d'un équipement électronique (2);
- une étape (42) de connexion dudit équipement électronique (2) avec un dispositif distant d'évaluation (4) du niveau de sécurité, au travers de moyens d'échange d'informations (2,6,8) ;
- une étape (46) d'évaluation du niveau de sécurité de fonctionnement desdits moyens d'échange d'informations (2,6,8),
- une étape (48) de récupération, par ledit dispositif distant (4), de ladite évaluation du niveau de sécurité de fonctionnement local de l'équipement électronique (2) : et
- une étape (50) de synthèse des évaluations du niveau de sécurité de fonctionnement local de l'équipement électronique (2) et du niveau de sécurité de fonctionnement des moyens d'échange d'informations (2,6,8) afin de délivrer une évaluation globale du niveau de sécurité de fonctionnement de l'équipement électronique (2) à partir du dispositif distant d'évaluation (4) du niveau de sécurité ;
le procédé étant **caractérisé en ce qu'**il comprend en outre :
- une étape (56) d'accès conditionnel de l'équipement électronique (2) à des ressources (32) en fonction de l'évaluation globale du niveau de sécurité de l'équipement électronique (2).

2. Procédé selon la revendication 1, **caractérisé en ce que** ladite étape (40) d'évaluation du niveau de sécurité de fonctionnement local de l'équipement électronique (2) et ladite étape (46) d'évaluation du niveau de sécurité de fonctionnement des moyens d'échange d'informations (2,6,8) comprennent l'évaluation de caractéristiques matérielles et logicielles ainsi que structurelles et fonctionnelles de cet équipement électronique (2) et des moyens d'échange d'informations (2,6,8).

3. Procédé selon l'une quelconque des revendications 1 et 2, **caractérisé en ce que** ledit dispositif distant d'évaluation (4) est associé à plusieurs équipements électroniques (2) et **en ce que** ledit procédé comporte une étape (52) de mémorisation de l'évaluation globale du niveau de sécurité délivrée pour chaque équipement électronique (2), et une étape (54) d'analyse statistique de ces évaluations globales mémorisées.

4. Procédé selon l'une quelconque des revendications 1 à 3, **caractérisé en ce que** ladite étape (48) de récupération à distance de ladite évaluation du niveau de sécurité de fonctionnement local de l'équipement électronique (2), comprend le chiffrement des données à transmettre avant leur transmission et le déchiffrement de ces données lors de la réception.

5. Procédé selon l'une quelconque des revendications 1 à 4, **caractérisé en ce qu'**il comporte en outre une étape (44) d'authentification de l'utilisateur de l'équipement électronique (2) et **en ce que** ladite étape (56) d'accès conditionnel est fonction du résultat de ladite étape (44) d'authentification.

6. Procédé selon l'une quelconque des revendications 1 à 5, **caractérisé en ce que** lesdites ressources (32) sont segmentées et **en ce que** ladite étape (56) d'accès conditionnel permet l'accès à différentes parties desdites ressources (32) en fonction de ladite évaluation globale.

7. Procédé selon l'une quelconque des revendications 1 à 6, **caractérisé en ce qu'**en cas d'évaluation globale du niveau de sécurité inférieure à une valeur de seuil prédéterminée, ladite étape (56) d'accès conditionnel est suivie d'une étape (60) de quarantaine comportant une sous-étape (62) de diagnostic des problèmes de sécurité détectés et/ou une sous-étape (64) de traitement permettant de délivrer des solutions pour accroître le niveau de sécurité de fonctionnement de l'équipement électronique (2).

8. Système du type comprenant :
des moyens d'échange d'informations (2,6,8),
un équipement électronique (2) comportant des moyens (10) intégrés d'évaluation du niveau de sécurité de son fonctionnement local,
un dispositif distant d'évaluation (4) du niveau de sécurité raccordé à l'équipement électronique (2) par les moyens d'échange d'informations (2,6,8), ledit dispositif distant (4) comportant des moyens (12) d'évaluation du niveau de sécurité de fonctionnement desdits moyens d'échange d'informations (2,6,8)
système dans lequel l'équipement électronique (2) comporte des moyens (14) de transmission de l'évaluation délivrée par lesdits moyens (10) intégrés d'évaluation vers des moyens (16) de récupération correspondants intégrés dans ledit dispositif distant d'évaluation (4), et dans lequel ledit dispositif distant d'évaluation (4) comporte en outre des moyens (18) de synthèse des évaluations du niveau de sécurité de fonctionnement local du ou de chaque équipement électronique (2) et du niveau de sécurité de fonctionnement des moyens d'échange d'informations (2,6,8) afin de délivrer une évaluation globale du niveau de sécurité de fonctionnement du ou de chaque équipement électronique (2),
le système étant **caractérisé en outre en ce qu'**il comprend des ressources (32) et **en ce que** le système est un système d'accès conditionnel, de sorte que le dispositif distant d'évaluation 4 est relié à un dispositif commandable 30 d'accès aux ressources en fonction de l'évaluation globale du niveau de sécurité délivrée.

9. Système selon la revendication 8, **caractérisé en ce que** lesdits moyens (10) d'évaluation du niveau de sécurité de fonctionnement local du ou de chaque équipement électronique (2) et lesdits moyens (12) d'évaluation du niveau de sécurité de fonctionnement desdits moyens d'échange d'informations (2,6,8) sont adaptés pour délivrer des informations d'évaluation de natures matérielles et logicielles ainsi que structurelles et fonctionnelles.

10. Système selon la revendication 9, **caractérisé en ce que** lesdits moyens (10) d'évaluation du niveau de sécurité de fonctionnement local du ou ce chaque équipement électronique (2) comportent au moins un élément sélectionné dans le groupe formé :
- de moyens de détection de la nature et de la version des moyens logiciels présents sur l'équipement électronique (2) ;
- de moyens de vérification du statut des moyens logiciels de sécurité de l'équipement électronique (2) ;
- de moyens de vérification de l'utilisation de mots de passe et de leur niveau de sécurité ;
- de moyens de vérification des interfaces d'entrées/sorties d'informations de l'équipement électronique (2) et des moyens logiciels associés
- de moyens de détection des accès à distance possibles sur l'équipement électronique (2) ;
- de moyens de détection de logiciels cachés sur l'équipement électronique (2).

11. Système selon la revendication 9, **caractérisé en ce que** lesdits moyens (12) d'évaluation du niveau de sécurité de fonctionnement desdits moyens d'échange d'informations (2 ,6, 8) comportent au moins un élément sélectionné dans le groupe formé :
- de moyens de détection des protocoles d'échange d'informations activés ;
- de moyens de vérification des interfaces d'entrées/sorties d'informations de l'équipement électronique (2) accessibles à distance et des moyens logiciels associés ;
- de moyens de détection des moyens logiciels présents sur l'équipement électronique (2) ainsi que de leur statut de fonctionnement ; et
- de moyens de détection de la configuration des équipements de connexion (8) formant la liaison entre ledit équipement électronique (2) et le dispositif distant d'évaluation (4).

12. Système selon l'une quelconque des revendications 8 à 11, **caractérisé en ce qu'**il comporte en outre des moyens de mémorisation (22) adaptés pour enregistrer les évaluations globales de niveau de sécurité délivrées pour le ou chaque équipement électronique (2) et des moyens (24) d'analyse statistique de ces évaluations globales mémorisées.

13. Système selon l'une quelconque des revendications 8 à 12, **caractérisé en ce que** lesdits moyens (14) de transmission de l'évaluation du niveau de sécurité de fonctionnement local de l'équipement électronique (2) et lesdits moyens (16) de récupération correspondants, comportent des moyens de chiffrement et de déchiffrement des informations échangées.

14. Programme d'ordinateur comprenant des instructions de programme d'ordinateur, qui, lorsqu'exécutées sur un ordinateur, mettent en oeuvre une étape (56) d'accès conditionnel d'équipement électronique (2) à des ressources (32) en fonction de l'évaluation globale du niveau de sécurité de l'équipement électronique (2) à partir d'un dispositif distant d'évaluation (4) du niveau de sécurité, raccordé à l'équipement électronique (2) par les moyens d'échange d'informations (2,6,8), l'évaluation globale du niveau de sécurité, de l'équipement électronique (2) ayant été obtenue par une synthèse d'une évaluation du niveau de sécurité de fonctionnement local de l'équipement électronique (2) et d'une évalutation du niveau de sécurité de fonctionnement des moyens d'échange d'informations (2,6,8).

## Claims

1. Method, of the type comprising:
- a step (40) for assessing the level of local operating security of electronic equipment (2);
- a step (42) of connecting said electronic equipment (2) with a remote device (4) for assessing the security level, through means of exchanging information (2, 6, 8);
- a step (46) for assessing the level of operating security of said means of exchanging information (2, 6, 8),
- a step (48) for recovery, by said remote device (4), of said assessment of the level of local operating security of the electronic equipment (2); and
- a step (50) for synthesizing assessments of the level of local operating security of the electronic equipment (2) and of the level of operating security of the means of exchanging information (2, 6, 8) in order to deliver an overall assessment of the level of operating security of the electronic equipment (2) from the remote device (4) for assessing the security level;
the method being **characterized in that** it comprises moreover:
- a step (56) for conditional access of the electronic equipment (2) to resources (32) according to the overall assessment of the security level of the electronic equipment (2).

2. Method according to Claim 1, **characterized in that** said step (40) for assessing the level of local operating security of the electronic equipment (2) and said step (46) for assessing the level of operating security of the means of exchanging information (2, 6, 8) comprise the assessment of hardware and software characteristics, as well as structural and functional characteristics, of this electronic equipment (2) and of the means of exchanging information (2, 6, 8).

3. Method according to either of Claims 1 and 2, **characterized in that** said remote assessment device (4) is associated with a plurality of electronic equipment (2) and **in that** said method comprises a step (52) for storing the overall assessment of the security level delivered for each item of electronic equipment (2), and a step (54) for statistical analysis of these stored overall assessments.

4. Method according to any one of Claims 1 to 3, **characterized in that** said step (48) of remote recovery of said assessment of the level of local operating security of the electronic equipment (2) comprises the encryption of the data to be transmitted before its transmission and the decryption of this data on its reception.

5. Method according to any one of Claims 1 to 4, **characterized in that** it also comprises a step (44) for authentication of the user of the electronic equipment (2) and **in that** said step (56) for conditional access is dependent on the result of said authentication step (44).

6. Method according to any one of Claims 1 to 5, **characterized in that** said resources (32) are segmented and **in that** said step (56) of conditional access allows access to different parts of said resources (32) according to said overall assessment.

7. Method according to any one of Claims 1 to 6, **characterized in that**, in case of an overall assessment of the security level that is lower than a predetermined threshold value, said conditional access step (56) is followed by a quarantine step (60) comprising a substep (62) for diagnosing security problems detected and/or a processing substep (64) making it possible to deliver solutions to increase the level of operating security of the electronic equipment (2).

8. System of the type comprising:
means of exchanging information (2, 6, 8),
electronic equipment (2) comprising integrated means (10) of assessing the security level of its local operation,
a remote device (4) for assessing the security level connected to the electronic equipment (2) by means of exchanging information (2, 6, 8), said remote device (4) comprising means (12) of assessing the level of operating security of said means of exchanging information (2, 6, 8),
system in which the electronic equipment (2) comprises means (14) of transmitting the assessment delivered by said integrated assessment means (10) to corresponding recovery means (16) integrated in said remote assessment device (4), and in which said remote assessment device (4) comprises moreover means (18) of synthesizing assessments of the level of local operating security of the or each electronic equipment (2) and of the level of operating security of the means of exchanging information (2, 6, 8) in order to deliver an overall assessment of the level of operating security of the or each electronic equipment (2),
the system being **characterized** moreover in that it comprises resources (32) and in that the system is a conditional access system, such that the remote assessment device (4) is linked to a controllable device (30) for access to the resources according to the overall assessment of the security level delivered.

9. System according to Claim 8, **characterized in that** said means (10) of assessing the level of local operating security of the or each electronic equipment (2) and said means (12) of assessing the level of operating security of said means of exchanging information (2, 6, 8) are adapted to deliver assessment information of hardware and software, as well as structural and functional, kinds.

10. System according to Claim 9, **characterized in that** said means (10) of assessing the level of local operating security of the or each electronic equipment (2) comprise at least one element selected from the group formed:
- by means of detecting the nature and the version of the software means present on the electronic equipment (2);
- by means of verifying the status of the software security means of the electronic equipment (2);
- by means of verifying the use of passwords and their security level;
- by means of verifying information input/output interfaces of the electronic equipment (2) and the associated software means;
- by means of detecting possible remote access on the electronic equipment (2);
- by software detection means concealed on the electronic equipment (2).

11. System according to Claim 9, **characterized in that** said means (12) of assessing the level of operating security of said means of exchanging information (2, 6, 8) comprise at least one element selected from the group formed:
- by means of detecting information exchange protocols activated;
- by means of verifying information input/output interfaces of the electronic equipment (2) that can be accessed remotely and the associated software means;
- by means of detecting software means present on the electronic equipment (2) and their operating status; and
- by means of detecting the configuration of the connection equipment (8) forming the link between said electronic equipment (2) and the remote assessment device (4).

12. System according to any one of Claims 8 to 11, **characterized in that** it comprises moreover storage means (22) adapted to save the overall security level assessments delivered for the or each electronic equipment (2) and means (24) of statistically analyzing these stored overall assessments.

13. System according to any one of Claims 8 to 12, **characterized in that** said means (14) of transmitting the assessment of the level of local operating security of the electronic equipment (2) and said corresponding recovery means (16), comprise means of encrypting and decrypting information exchanged.

14. Computer program comprising computer program instructions which, when executed on a computer, implement a step (56) for conditional access of electronic equipment (2) to resources (32) according to the overall assessment of the security level of the electronic equipment (2) from a remote device (4) for assessing the security level, connected to the electronic equipment (2) by the means of exchanging information (2, 6, 8), the overall assessment of the security level of the electronic equipment (2) having been obtained by a synthesis of an assessment of the level of local operating security of the electronic equipment (2) and of an assessment of the level of operating security of the means of exchanging information (2, 6, 8).

## Patentansprüche

1. Verfahren des Typs, der aufweist:
- einen Bewertungsschritt (40) des Lokalbetrieb-Sicherheitsgrads eines elektronischen Geräts (2);
- einen Schritt (42) der Verbindung des elektronischen Geräts (2) mit einer fernen Bewertungsvorrichtung (4) des Sicherheitsgrads über Informationsaustauschmittel (2, 6, 8);
- einen Bewertungsschritt (46) des Betriebs-Sicherheitsgrads der Informationsaustauschmittel (2, 6, 8),
- einen Wiedergewinnungsschritt (48) der Bewertung des Lokalbetrieb-Sicherheitsgrads des elektronischen Geräts (2) durch die ferne Vorrichtung (4); und
- einen Schritt (50) der Synthese der Bewertungen des Lokalbetrieb-Sicherheitsgrads des elektronischen Geräts (2) und des Betriebs-Sicherheitsgrads der Informationsaustauschmittel (2, 6, 8), um eine globale Bewertung des Betriebs-Sicherheitsgrads des elektronischen Geräts (2) ausgehend von der fernen Bewertungsvorrichtung (4) des Sicherheitsgrads zu liefern;
wobei das Verfahren **dadurch gekennzeichnet ist, dass** es außerdem aufweist:
- einen Zugangsberechtigungsschritt (56) des elektronischen Geräts (2) auf Ressourcen (32) in Abhängigkeit von der globalen Bewertung des Sicherheitsgrads des elektronischen Geräts (2).

2. Verfahren nach Anspruch 1, **dadurch gekennzeichnet, dass** der Bewertungsschritt (40) des Lokalbetrieb-Sicherheitsgrads des elektronischen Geräts (2) und der Bewertungsschritt (46) des Betriebs-Sicherheitsgrads der Informationsaustauschmittel (2, 6, 8) die Bewertung von Hardware- und Software- sowie von strukturellen und funktionellen Merkmalen dieses elektronischen Geräts (2) und der Informationsaustauschmittel (2, 6, 8) aufweisen.

3. Verfahren nach einem der Ansprüche 1 und 2, **dadurch gekennzeichnet, dass** die ferne Bewertungsvorrichtung (4) mehreren elektronischen Geräten (2) zugeordnet ist, und dass das Verfahren einen Speicherschritt (52) der globalen Bewertung des Sicherheitsgrads, die für jedes elektronische Gerät (2) geliefert wird, und einen Schritt (54) der statistischen Analyse dieser gespeicherten globalen Bewertungen aufweist.

4. Verfahren nach einem der Ansprüche 1 bis 3, **dadurch gekennzeichnet, dass** der Schritt (48) der Fernwiedergewinnung der Bewertung des Lokalbetrieb-Sicherheitsgrads des elektronischen Geräts (2) die Verschlüsselung der zu übertragenden Daten vor ihrer Übertragung und die Entschlüsselung dieser Daten beim Empfang aufweist.

5. Verfahren nach einem der Ansprüche 1 bis 4, **dadurch gekennzeichnet, dass** es außerdem einen Authentifizierungsschritt (44) des Benutzers des elektronischen Geräts (2) aufweist, und dass der Zugangsberechtigungsschritt (56) vom Ergebnis des Authentifizierungsschritts (44) abhängt.

6. Verfahren nach einem der Ansprüche 1 bis 5, **dadurch gekennzeichnet, dass** die Ressourcen (32) segmentiert sind, und dass der Zugangsberechtigungsschritt (56) den Zugang zu verschiedenen Teilen der Ressourcen (32) in Abhängigkeit von der globalen Bewertung erlaubt.

7. Verfahren nach einem der Ansprüche 1 bis 6, **dadurch gekennzeichnet, dass** im Fall der globalen Bewertung des Sicherheitsgrads unterhalb eines vorbestimmten Schwellenwerts auf den Zugangsberechtigungsschritt (56) ein Quarantäneschritt (60) folgt, der einen Teilschritt (62) der Diagnose der erfassten Sicherheitsprobleme und/oder einen Teilschritt (64) der Verarbeitung aufweist, der es ermöglicht, Lösungen zu liefern, um den Betriebs-Sicherheitsgrad des elektronischen Geräts (2) zu erhöhen.

8. System des Typs, der aufweist:
Informationsaustauschmittel (2, 6, 8),
ein elektronisches Gerät (2), das integrierte Bewertungsmittel (10) des Sicherheitsgrads seines Lokalbetriebs aufweist,
eine ferne Bewertungsvorrichtung (4) des Sicherheitsgrads, die an das elektronische Gerät (2) über Informationsaustauschmittel (2, 6, 8) angeschlossen ist, wobei die ferne Vorrichtung (4) Bewertungsmittel (12) des Betriebs-Sicherheitsgrads der Informationsaustauschmittel (2, 6, 8) aufweist,
System, in dem das elektronische Gerät (2) Übertragungsmittel (14) der von den integrierten Bewertungsmittel (10) gelieferten Bewertung an entsprechende Wiedergewinnungsmittel (16) aufweist, die in die ferne Bewertungsvorrichtung (4) integriert sind, und in dem die ferne Bewertungsvorrichtung (4) außerdem Synthesemittel (18) der Bewertungen des Lokalbetrieb-Sicherheitsgrads des oder jedes elektronischen Geräts (2) und des Betriebs-Sicherheitsgrads der Informationsaustauschmittel (2, 6, 8) aufweist, um eine globale Bewertung des Betriebs-Sicherheitsgrads des oder jedes elektronischen Geräts (2) zu liefern,
wobei das System außerdem **dadurch gekennzeichnet ist, dass** es Ressourcen (32) aufweist, und dass das System ein Zugangsberechtigungssystem ist, so dass die ferne Bewertungsvorrichtung (4) in Abhängigkeit von der gelieferten globalen Bewertung des Sicherheitsgrads mit einer steuerbaren Zugangsvorrichtung (30) zu den Ressourcen verbunden wird.

9. System nach Anspruch 8, **dadurch gekennzeichnet, dass** die Bewertungsmittel (10) des Lokalbetrieb-Sicherheitsgrads des oder jedes elektronischen Geräts (2) und die Bewertungsmittel (12) des Betriebs-Sicherheitsgrads der Informationsaustauschmittel (2, 6, 8) geeignet sind, um Bewertungsinformationen der Art Hardware und Software sowie von struktureller und funktioneller Art zu liefern.

10. System nach Anspruch 9, **dadurch gekennzeichnet, dass** die Bewertungsmittel (10) des Lokalbetrieb-Sicherheitsgrads des oder jedes elektronischen Geräts (2) mindestens ein Element aufweisen, das aus der Gruppe ausgewählt wird, die besteht aus:
- Erfassungsmittel der Art und der Version der im elektronischen Gerät (2) vorhandenen Softwaremittel;
- Überprüfungsmittel des Status der Sicherheitssoftwaremittel des elektronischen Geräts (2);
- Überprüfungsmittel der Verwendung von Passwörtern und ihres Sicherheitsgrads;
- Überprüfungsmittel der Informations-Eingangs-/Ausgangs-Schnittstellen des elektronischen Geräts (2) und der zugeordneten Softwaremittel;
- Erfassungsmittel der möglichen Fernzugänge zum elektronischen Gerät (2);
- Erfassungsmittel von im elektronischen Gerät (2) versteckten Softwareprogrammen.

11. System nach Anspruch 9, **dadurch gekennzeichnet, dass** die Bewertungsmittel (12) des Betriebs-Sicherheitsgrads der Informationsaustauschmittel (2, 6, 8) mindestens ein Element aufweisen, das aus der Gruppe ausgewählt wird, die besteht aus:
- Erfassungsmittel der aktivierten Informationsaustauschprotokolle,
- Überprüfungsmittel der fernzugänglichen Informations-Eingangs-/Ausgangs-Schnittstellen des elektronischen Geräts (2) und der zugeordneten Softwaremittel;
- Erfassungsmittel der Softwaremittel, die im elektronischen Gerät (2) vorhanden sind, sowie ihres Betriebsstatus; und
- Erfassungsmittel der Konfiguration der Verbindungsgeräte (8), die die Verbindung zwischen dem elektronischen Gerät (2) und der fernen Bewertungsvorrichtung (4) bilden.

12. System nach einem der Ansprüche 8 bis 11, **dadurch gekennzeichnet, dass** es außerdem Speichermittel (22), die geeignet sind, um die globalen Sicherheitsgrad-Bewertungen aufzuzeichnen, die für das oder jedes elektronische Gerät (2) geliefert werden, und Mittel (24) zur statistischen Analyse dieser gespeicherten globalen Bewertungen aufweist.

13. System nach einem der Ansprüche 8 bis 12, **dadurch gekennzeichnet, dass** die Übertragungsmittel (14) der Bewertung des Lokalbetrieb-Sicherheitsgrads des elektronischen Geräts (2) und die entsprechenden Wiedergewinnungsmittel (16) Mittel zur Verschlüsselung und zur Entschlüsselung der ausgetauschten Informationen aufweisen.

14. Computerprogramm, das Computerprogrammanweisungen aufweist, die, wenn sie in einem Computer ausgeführt werden, einen Zugangsberechtigungsschritt (56) eines elektronischen Geräts (2) zu Ressourcen (32) in Abhängigkeit von der globalen Bewertung des Sicherheitsgrads des elektronischen Geräts (2) ausgehend von einer fernen Bewertungsvorrichtung (4) des Sicherheitsgrads anwenden, die an das elektronische Gerät (2) durch die Informationsaustauschmittel (2, 6, 8) angeschlossen ist, wobei die globale Bewertung des Sicherheitsgrads des elektronischen Geräts (2) durch eine Synthese einer Bewertung des Lokalbetrieb-Sicherheitsgrads des elektronischen Geräts (2) und einer Bewertung des Betriebs-Sicherheitsgrads der Informationsaustauschmittel (2, 6, 8) erhalten wurde.
